Europäisches Patentamt

European Patent Office

Office européen des brevets

(11) Veröffentlichungsnummer: **0 339 254 B1**

## (12) EUROPÄISCHE PATENTSCHRIFT

(45) Veröffentlichungstag der Patentschrift: **11.11.92**

(21) Anmeldenummer: **89104986.8**

(22) Anmeldetag: **21.03.89**

(51) Int. Cl.5: **G01G 11/00**, G01G 13/14, G01G 15/00

(54) **Vorrichtung zum Wägen von Verpackungsbehältern.**

(30) Priorität: **29.04.88 DE 3814481**

(43) Veröffentlichungstag der Anmeldung:
**02.11.89 Patentblatt 89/44**

(45) Bekanntmachung des Hinweises auf die
Patenterteilung:
**11.11.92 Patentblatt 92/46**

(84) Benannte Vertragsstaaten:
**CH DE IT LI SE**

(56) Entgegenhaltungen:
**EP-A- 0 077 992**
**EP-A- 0 274 797**
**DE-A- 3 814 483**

**SOVIET JOURNAL OF INSTRUMENTATION
AND CONTROL. no. 5, May 1969, Oxford, GB,
pages 69-70; R.LEVINSON, V.PANIMAN: "AN
ELECTRONIC STRAIN GAUGE CHECK-
WEIGHING DEVICE"**

(73) Patentinhaber: **ROBERT BOSCH GMBH**
**Postfach 30 02 20**
**W-7000 Stuttgart 30(DE)**

(72) Erfinder: **Gaukler, Fritz**
**Tucholskystrasse 2**
**W-7000 Stuttgart 30(DE)**

EP 0 339 254 B1

## Beschreibung

### Stand der Technik

Die Erfindung geht aus von einer Vorrichtung zum Durchführen von Wägungen von Verpakkungsbehältern in einer Verpackungsmaschine nach dem Oberbegriff des Anspruchs 1.

In Verpackungsmaschinen, in denen zu füllende Verpackungsbehälter von Mitnehmern einer Fördereinrichtung schrittweise zu den einzelnen Behandlungsstationen gefördert werden, wird, um genaue Füllgewichte zu erzielen, das Tara- und/oder das Bruttogewicht der Behälter durch Wägen ermittelt und davon abhängig die Füllung gesteuert (DE-PS 16 36 213). Die Aufnahmen der Waagen sind dazu im Förderweg der Verpackungsbehälter angeordnet. Um einen Verpackungsbehälter auf der Aufnahme der Waage freizustellen, so daß Reibungseinflüsse ausgeschaltet werden, sind die Mitnehmer der Fördereinrichtung vom Verpackungsbehälter abschwenkbar (DE-PS 23 16 490).

Aus verschiedenen technischen Gründen ist es nicht immer möglich, die oben angeführte Art der Wägung der Verpackungsbehalter in der Fördereinrichtung durchzuführen. Es ist daher auch eine Vorrichtung zum Durchführen von Wägungen von Verpackungsbehältern bekannt geworden (EP-B-77 992), bei der neben der Förderstrecke der Fördereinrichtung eine Waage angeordnet ist, zu deren Aufnahme jeweils ein Verpackungsbehälter mittels eines Schiebers mit einem Mitnehmerpaar verschoben und nach dem Wägevorgang wieder zurück befördert wird. Bei dieser bekannten Vorrichtung wird stichprobenartig aus einer fortlaufenden Reihe von bereits gefüllten Verpackungsbehältern jeweils ein Verpackungsbehälter ausgesondert und während dessen Wägung die nachfolgenden Verpackungsbehälter der Reihe durch eine Klemmeinrichtung zurückgehalten, so daß der gewogene Verpackungsbehälter wieder an seinen ursprünglichen Platz in der Reihe zurückgebracht werden kann. Dieses Aufhalten der Packungsreihe ist bei hoher Ausbringung einer Verpackungsmaschine nur schwierig durchzuführen. Es ist daher eine Vorrichtung zum Durchführen von Wägungen von Verpackungsbehältern anzustreben, bei der die Packungsreihe nicht unterbrochen wird.

### Vorteile der Erfindung

Die erfindungsgemäße Wägevorrichtung mit den kennzeichnenden Merkmalen des Anspruchs 1 hat den Vorteil, daß ohne die Abstände der Verpackungsbehälter in der Reihe zu ändern, ein Wägen von Verpackungsbehältern bei hohem Durchsatz von Verpackungsbehältern in der Fördereinrichtung möglich ist. Durch die Anordnung eines Abstellplatzes symmetrisch zur Waage kann nämlich gleichzeitig mit dem Herausnehmen eines zu wägenden Verpackungsbehälters aus der Reihe ein zuvor dort abgestellter Verpackungsbehälter in die Lücke zurückgebracht und beim Zurückführen des gewogenen Verpackungsbehälters ein anderer Verpackungsbehälter in Reserve gebracht werden, so daß der gewogene Verpackungsbehälter die Stelle des in Reserve gehenden Verpackungsbehälters in der Reihe einnimmt.

Durch die in den abhängigen Ansprüchen aufgeführten Maßnahmen sind vorteilhafte Weiterbildungen und Verbesserungen der im Anspruch 1 angegebenen Vorrichtung möglich.

Besonders vorteilhaft ist die Ausbildung des Abstellplatzes als zweite Waage, so daß eine Verdoppelung der Wägeleistung erzielt wird und zwar in der Höhe, daß die Verpackungsbehälter nicht nur stichprobenartig, sondern in ihrer Gesamtheit gewogen werden können. Insbesondere ist die erfindungsgemäße Wägevorrichtung in Verbindung mit einer solchen Fördereinrichtung vorteilhaft, die zum Transportieren von Verpackungsbehältern Mitnehmerpaare hat, von denen je ein Mitnehmer je einen Verpackungsbehälter an dessen Vorderwand bzw. an dessen Rückwand hält und die Verpackungsbehälter von ortsfesten Führungen seitlich geführt werden.

### Zeichnung

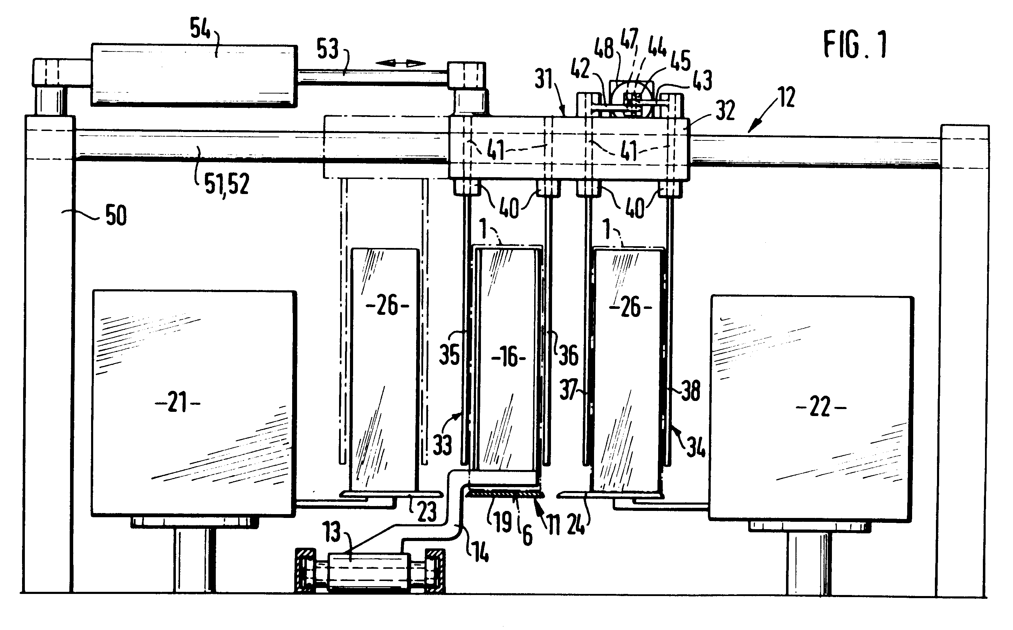

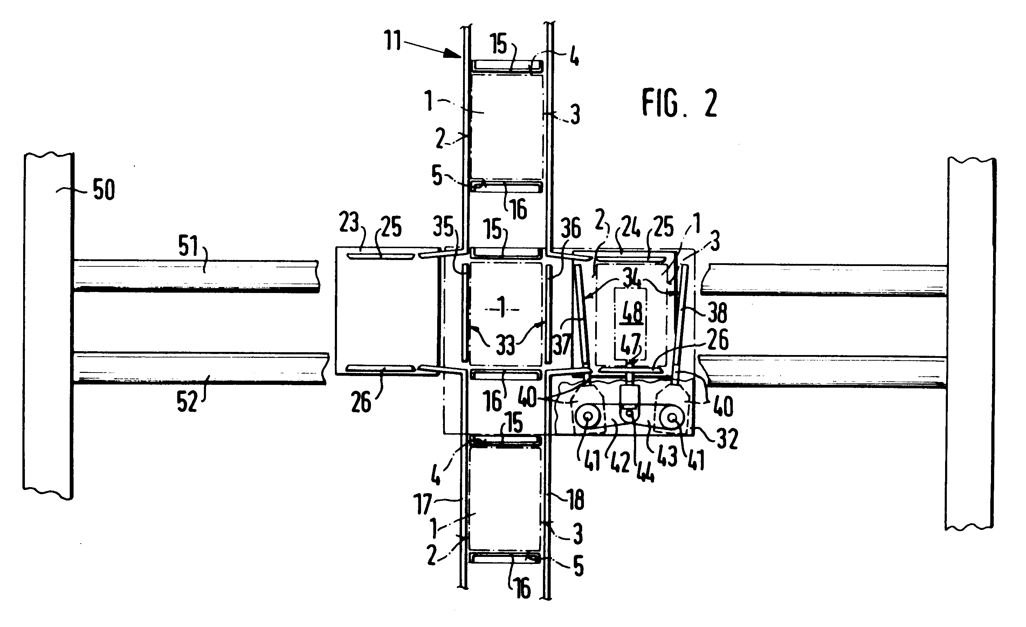

Ein Ausführungsbeispiel der Erfindung ist in der Zeichnung dargestellt und in der nachfolgenden Beschreibung näher erläutert. Es zeigen Figur 1 eine einer Fördereinrichtung zugeordnete Wägevorrichtung in Seitenansicht und Figur 2 eine Wägevorrichtung nach Figur 1 in Draufsicht.

### Beschreibung des Ausführungsbeispiels

Einer Fördereinrichtung 11 für beispielsweise quaderförmige Verpackungsbehälter 1 ist zum Durchführen einer Wägung der Verpackungsbehälter 1 ein Wägevorrichtung 12 zugeordnet. Die Fördereinrichtung 11 besteht aus einer endlosen Förderkette 13 mit Mitnehmerpaaren, deren einzelne Mitnehmer 15, 16 mittels Armen 14 mit der Förderkette 13 nach außen abstehend verbunden sind. An der waagrecht verlaufenden Förderstrecke der Mitnehmer 15, 16 sind seitliche Führungsleisten 17, 18 ortsfest angeordnet, deren Abstand voneinander der Breite eines Verpackungsbehälters 1 entspricht, so daß sie die Verpackungsbehälter 1 an deren Seitenwänden 2, 3 führen. Die beiden Mitnehmer 15, 16 eines Paares sind im Abstand der Länge eines Verpackungsbehälters 1 an der Förderkette 13 angeordnet, so daß der eine Mitnehmer 15 die Vorderwand 4 und der andere Mitnehmer 16 die Rückwand 5 in Förderrichtung gesehen einschließen. Unterhalb der Förderstrecke der Mitnehmer 15, 16 ist eine ortsfeste Führungsschiene 19 angeordnet, die die Verpackungsbehälter 1 an ihrem Boden 6 beim Fördern stützt. Die Fördereinrichtung wird taktweise um jeweils eine Teilung der Mitnehmerpaare 15, 16 geschaltet, wobei die mitgeführten Verpackungsbehälter 1 nacheinander den einzelnen Stationen einer Verpackungsmaschine zum Füllen, Wägen und Verschließen zugeführt werden.

Die Wägevorrichtung 12 ist einer Station der Fördereinrichtung 11 zugeordnet. Auf dieser Station haben die Führungsleisten 17, 18 eine Unterbrechung. Die Wägevorrichtung 12 hat beidseits der Fördereinrichtung 13 je eine stationäre Waage 21, 22 mit einer Wägeplatte 23, 24 als Aufnahme. Die Wägeplatten 23, 24 sind in gleicher horizontaler Ebene wie die Führungsschiene 19 und zu dieser in geringem Abstand angeordnet. Zum Fixieren eines Verpackungsbehälters 1 auf einer Wägeplatte 23, 24 hat diese zwei im Abstand der Länge eines Verpackungsbehälters 1 nach oben abstehende Wände 25, 26, die parallel zu den Mitnehmern 15, 16 der Förderrichtung 11 verlaufen.

Zum Überführen von Verpackungsbehältern 1 auf die Wägeplatten 23, 24 ist ein die Fördereinrichtung 11 querender Schieber 31 angeordnet. Dieser Schieber 31 hat einen Schlitten 32 mit zwei nach unten abstehenden, plattenförmigen Mitnehmerpaaren 33, 34, wobei die Mitnehmer 35, 36 bzw. 37, 38 jedes Paares einen der Breite eines Verpackungsbehälters 1 entsprechenden Abstand in der Halte- und Überführungsstellung einnehmen, so daß sie einen Verpackungsbehälter 1 zwischen einander einschließen können. Der mittlere Abstand der Mitnehmerpaare 33, 34 voneinander entspricht dem mittleren Abstand der Wägeplatten 23, 24 von der Führungsschiene 19. Die einzelnen Mitnehmer 35 bis 38 sind am Schlitten 32 schwenkbar gelagert, so daß sie außer Kontakt mit den Seitenwänden 2, 3 eines überführten Verpackungsbehälters 1 gebracht werden können. Dazu sind die Mitnehmer 35 bis 38 an Hebeln 40 befestigt, welche mit senkrecht den Schlitten 32 durchsetzenden Wellen 41 fest verbunden sind. An den oberen Enden je zweier zu einem Mitnehmerpaar 33 bzw. 34 gehörender Wellen 41 sind Hebel 42, 43 paarweise gegeneinander gerichtet befestigt, deren geschlitzte Enden einen Stift 44 einer Gabel 45 umgreifen. Je eine Gabel 45 sitzt am Ende einer Kolbenstange 47 je eines auf dem Schlitten 32 befestigten Fluidzylinders 48. Durch Beaufschlagen des Fluidzylinders 48 auf der einen oder anderen Seite werden die Mitnehmer 35, 36 bzw. 37, 38 je eines Paares in die Halte- und Überführungsstellung oder in die Freistellung für einen Verpackungsbehalter verschwenkt. Der Schlitten 32 ist auf zwei die Fördereinrichtung 11 und die Waagen 21, 22 überbrükkenden parallelen Stangen 51, 52 eines Gestells 50 verschiebbar gelagert. Er ist gelenkig mit der Kolbenstange 53 eines Fluidzylinders 54 verbunden, der am Gestell 50 angelenkt ist.

Die oben beschriebene Vorrichtung arbeitet wie folgt:
Die Fördereinrichtung 11 fördert schrittweise je einen Verpackungsbehälter 1 mit je einem Mitnehmerpaar 15, 16, wobei sich der Verpackungsbehälter 1 auf der Führungsschiene 19 abstützt und von den beiden seitlichen Führungsleisten 17, 18 geführt wird. Auf der Station mit der Wägevorrichtung 12, wo die Führungsschienen 17, 18 eine Unterbrechung haben, gelangt der mitgeführte Verpackungsbehälter 1 zwischen zwei Mitnehmer 35, 36 oder 37, 38 des Mitnehmerpaars 33 oder 34. Während einer darauffolgenden Stillstandszeit der Fördereinrichtung 11 wird der Schieber 31 jeweils um einen Hub, dessen Länge dem Abstand der beiden Mitnehmerpaare 33, 34 voneinander entspricht, abwechselnd nach links oder rechts verschoben. Dabei nimmt jeweils das mit der Fördereinrichtung 11 ausgerichtete Mitnehmerpaar 33 oder 34 den zugeführten Verpackungsbehälter 1 zu der freien Wägeplatte 23 bzw. 24 einer Waage 21 bzw. 22. Bei dem dargestellten Ausführungsbeispiel befindet sich der Schieber 31 in seiner rechten Stellung, in der sich sein rechtes Mitnehmerpaar 34 in Dekkung mit der Wägeplatte 24 der rechten Waage 22 und sein linkes Mitnehmerpaar 33 in Deckung mit der Förderstrecke der Fördereinrichtung 11 befinden. Auf dem Weg in rechte Endstellung hat das Mitnehmerpaar 34 einen Verpackungsbehälter 1 aus der Fördereinrichtung 11 auf die Wägeplatte 24 und das andere Mitnehmerpaar 33 einen Verpackungsbehälter 1 von der Wägeplatte 23 zwischen die Mitnehmer 15, 16 der Fördereinrichtung 11 verschoben. Beim darauffolgenden Förderschritt der Fördereinrichtung 11, wird der in die Fördereinrichtung 11 zurückgebrachte Behälter 1 um einen Förderschritt weiterbefördert und ein nachfolgender Verpackungsbehälter 1 in die Station mit der Wägevorrichtung 12 zwischen die beiden Mitnehmer 35, 36 des einen Mitnehmerpaars 33 zugeführt. Gleichzeitig werden die Mitnehmer 37, 38 des anderen Mitnehmerpaars 34 von dem mitgeführten Verpackungsbehälter 1 durch Beaufschlagen des Fluidzylinders 48 weggeschwenkt, so daß der Verpackungsbehälter lediglich zwischen den beiden Wänden 25, 26 gehalten frei auf der Wägeplatte 24 der Waage 22 steht. In dieser Stellung wird das Gewicht des Verpackungsbehälters 1 festgestellt und zur Weiterverarbeitung an eine Steuereinrichtung für eine Füll- oder Kontrolleinrichtung weitergegeben. Danach werden die Mitnehmer 37, 38 wieder in die Haltestellung zurückgeschwenkt.

Bei der nun wieder folgenden Stillstandszeit der Fördereinrichtung 11 wird der Schieber 31 durch Beaufschlagen des Fluidzylinders 54 in seine linke Stellung verschoben, wobei der zuvor in die Station mit der Wiegevorrichtung Verpackungsbehälter 1 von den Mitnehmern 35, 36 des einen Mitnehmerpaars auf die Wägeplatte 23 der Waage 21 verschiebt. Gleichzeitig wird der von der Waage 22 zuvor gewogene Verpackungsbehälter 1 von deren Wägeplatte 24 zwischen die bereitstehenden Mitnehmer 15, 16 der Fördereinrichtung 11 verbracht. Bei diesem wechselweisen Spiel werden alle von der Fördereinrichtung 11 herangeführten Verpackungsbehälter 1 nacheinander gewogen.

Falls stichprobenartige Wägungen der Verpackungsbehälter durchgeführt werden sollen, wird der Schieber 31 nach jeweils einer bestimmten Anzahl von Förderschritten der Fördereinrichtung 11 betätigt. Bei dieser Betriebsweise steht dann für die Wägung eine längere Zeitdauer zur Verfügung.

Bei einer vereinfachten Ausgestaltung der Wägevorrichtung zum stichprobenhaltigen Durchführen von Wägungen der Verpackungsbehälter hat diese lediglich eine Waage. Anstelle der symmetrisch angeordneten zweiten Waage ist lediglich ein Abstellplatz mit einer Abstellplatte anstelle der Wägeplatte vorgesehen. Bei dieser Ausführungsform wird an die Stelle des zum Wägen aus der Fördereinrichtung entnommenen Verpackungsbehälters ein zuvor auf den Abstellplatz gebrachter Verpackungsbehälter in die Fördereinrichtung zurückgebracht, und beim Zurückbringen eines gerade gewogenen Verpackungsbehälters ein gerade zugeführter Verpackungsbehälter auf den Abstellplatz als Vorrat verbracht, so daß in der Reihe der zugeführten Verpackungsbehälter keine Lücken auftreten.

Ergänzend wird darauf hingewiesen, daß mit der beschriebenen Wägevorrichtung sowohl Tara- als auch Bruttowägungen von Verpackungsbehältern durchgeführt werden können. Der Einfachheit halber sind Verpackungsbehälter mit quaderförmigen Querschnitt im Zusammenhang mit dem beschriebenen Ausführungsbeispiel dargestellt, es können aber auch bei entsprechender Anpassung der Mitnehmer anders gestaltete Verpackungsbehälter behandelt werden.

**Patentansprüche**

1. Vorrichtung zum Durchführen von Wägungen von Verpackungsbehältern in einer Verpackungsmaschine mit einer die Verpackungsbehälter (1) hintereinander schrittweise transportierenden Fördereinrichtung (11), mit wenigstens einer Waage (21, 22), die einen neben der Förderstrecke der Fördereinrichtung angeordnete Aufnahme (23, 24) hat, und mit einem taktweise hin- und herbewegbaren Schieber (31) mit Mitnehmern (35 bis 38), zwischen denen jeweils ein Verpackungsbehälter von der Fördereinrichtung zur Aufnahme und zurück gebracht wird, dadurch gekennzeichnet, daß am Schieber (31) zwei Mitnehmerpaare (33, 34) hintereinander in dessen Bewegungsachse angeordnet sind, und daß ein Abstellplatz symmetrisch zur Aufnahme (23 oder 24) der Waage (21 oder 22) in Bezug zur Förderstrecke der Fördereinrichtung (11) angeordnet ist.

2. Vorrichtung nach Anspruch 1, dadurch gekennzeichnet, daß der Abstellplatz eine Aufnahme (23 bzw. 24) einer zweiten Waage (21 bzw. 22) ist.

3. Vorrichtung nach Anspruch 1 oder 2, dadurch gekennzeichnet, daß an der Aufnahme (23, 24) Führungswände (25, 26) für Verpackungsbehälter (1) angeordnet sind, die parallel zum Verschiebeweg des Schiebers (31) ausgerichtet sind und zwischen denen ein Mitnehmer (35 bzw. 38) eines Mitnehmerpaares (33 bzw. 34) hindurchbewegt werden kann.

4. Vorrichtung nach einem der Ansprüche 1 bis 3, dadurch gekennzeichnet, daß die Mitnehmer (35 bis 38) am Schieber (31) bewegbar angeordnet sind.

5. Vorrichtung nach einem der Ansprüche 1 bis 4, dadurch gekennzeichnet, daß die Fördereinrichtung (11) Mitnehmerpaare (15, 16) zum Fördern von Verpackungsbehältern (1) und der Förderstrecke fest zugeordnete Führungen (17, 18) hat, die im Bereich des Verschiebewegs des Schiebers (31) Unterbrechungen haben.

**Claims**

1. Apparatus for carrying out operations of weighing packing containers in a packing machine comprising a conveyor device (11) conveying the packing containers (1) stepwise one behind the other, with at least one weighing machine (21, 22) which has a receiving member (23,24) disposed at the side of the conveyor path of the conveyor device, and with a slide (31) adapted to be moved intermittently to-and-fro and having drivers (35 to 38) between which in each case a packing container is brought to the receiving member and back by the conveyor device, characterised in that two pairs of drivers (33, 34) are disposed on the slide (31) one behind the other in the axis of movement of the latter, and in that a set-down area is disposed symmetrically to the receiving member (23 or 24) of the weighing machine (21 or 22) in relation to the conveying path of the conveyor device (11).

2. Apparatus according to Claim 1, characterised in that the set-down area is a receiving member (23 or 24) of a second weighing machine (21 or 22).

3. Apparatus according to Claim 1 or 2, characterised in that guide walls (25, 26) for packing containers (1) are disposed on the receiving member (23, 24) and are aligned parallel to the path of movement of the slide (31), a driver (35 or 38) of a pair of drivers (33 or 34) being able to be moved through between said guide walls.

4. Apparatus according to one of Claims 1 to 3, characterised in that the drivers (35 to 38) are movably mounted on the slide (31).

5. Apparatus according to one of Claims 1 to 4, characterised in that the conveyor device (11) has pairs of drivers (15, 16) for conveying packing containers (1) and also has guides (17, 18) which are permanently assigned to the conveyor path and have interruptions in the region of the path of movement of the slide (31).

**Revendications**

1. Dispositif pour peser des boîtes d'emballage dans une machine d'emballage comportant une installation de transfert (11) qui transporte pas-à-pas successivement les boîtes d'emballage (1), avec au moins une balance (21, 22) qui possède en plus du chemin de transfert de l'installation de transfert, des moyens de réception (23, 24) ainsi qu'un coulisseau (31) susceptible d'effectuer un mouvement alternatif au pas avec des organes d'entraînement (35 - 38) entre lesquels on conduit chaque fois une boîte d'emballage par l'installation de transfert pour être reçue puis être renvoyée, dispositif caractérisé par deux paires d'entraînement (33, 34) prévus successivement sur le tiroir (31), l'un derrière l'autre suivant l'axe de mouvement du tiroir et en ce qu'un point d'arrêt est prévu symétriquement au moyen de réception (23 ou 24) de la balance (21 ou 22) par rapport au chemin de transfert de l'installation de transfert (11).

2. Dispositif selon la revendication 1, caractérisé en ce que le point de dépôt est un réceptacle (23, 24) d'une seconde balance (21, 22).

3. Dispositif selon la revendication 1 ou 2, caractérisé en ce que le dépôt (23, 24) comporte des parois de guidage (25, 26) pour les boîtes d'emballage (1), ces parois étant parallèles à la trajectoire du tiroir (31) et entre ces parois peut être introduit un organe d'entraînement (35, 38) d'une paire d'organes d'entraînement (33, 34).

4. Dispositif selon l'une des revendications 1 à 3, caractérisé en ce que les organes d'entraînement (35 - 38) sont montés mobiles sur le tiroir (31).

5. Dispositif selon l'une des revendications 1 à 4, caractérisé en ce que l'installation de transfert (11) comporte des paires d'organes d'entraînement (15, 16) pour transférer les boîtes d'emballage (1) et le chemin de transfert a des moyens de guidage qui lui sont associés solidairement (17, 18) et qui présentent des interruptions dans la zone de la course de translation du tiroir (31).

FIG. 1

FIG. 2

EP 0 339 254 B1